(19) Europäisches Patentamt

European Patent Office

Office européen des brevets

(11) Veröffentlichungsnummer: **0 519 158 A1**

(12) **EUROPÄISCHE PATENTANMELDUNG**

| | | |
|---|---|---|
| (21) Anmeldenummer: **92102994.8** | (51) Int. Cl.⁵: **F01L 3/08**, F16J 15/32 | |

(22) Anmeldetag: **22.02.92**

(30) Priorität: **18.06.91 DE 4119952**

(43) Veröffentlichungstag der Anmeldung:
**23.12.92 Patentblatt 92/52**

(84) Benannte Vertragsstaaten:
**DE ES FR GB IT SE**

(71) Anmelder: **GOETZE AG**
**Bürgermeister-Schmidt-Strasse 17**
**W-5093 Burscheid 1(DE)**

(72) Erfinder: **Worsley, Clifford Roland**
**Walter-Kolb-Strasse 27**
**W-4018 Langenfeld(DE)**

(54) **Ventilschaftabdichtung.**

㊼ Die Erfindung betrifft eine Ventilschaftabdichtung (1) für Brennkraftmaschinen mit hohen Drücken in den Ein- und/oder Auslaßkanälen. Die Dichtung weist zwei entgegengesetzt wirkende Dichtlippen (5,9) auf, wobei eine als Gas- und die andere als Öllippe fungiert. Zum Schutz der Öllippe (5) ist die Gaslippe (9) schwingungstechnisch von der Öllippe (5) über einen druckstabilen Bereich (8) entkoppelt.

Rank Xerox (UK) Business Services

Die Erfindung betrifft eine Ventilschaftabdichtung für Brennkraftmaschinen mit hohem Druck in den Ein- und/oder Auslaßkanälen, bestehend aus einem verformungssteifen Gehäuse, in dem ein elastomerer Dichtkörper angeordnet ist, welcher mindestens zwei am Ventilschaft anliegende, in entgegengesetzte Richtungen wirkende Dichtlippen aufweist, wobei eine zur Medienseite gerichtete Dichtlippe als Öllippe und eine zur Brennraumseite gerichtete Dichtlippe als Gaslippe fungiert, sowie einem auf die Ventilführung aufsteckbaren Hafteil und einer radiale Bewegungen zulassenden elastischen Membran, welche mit der Öllippe verbunden ist.

Das deutsche Gebrauchsmuster 1.966.994 offenbart eine Ventilschaftabdichtung mit zwei am Ventilschaft anliegenden Dichtlippen. Die Dichtlippen sind unmittelbar axial nebeneinander angeordnet beziehungsweise die als Gaslippe fungierende Dichtlippe ist aus der Öllippe herausgebildet. Beide Dichtlippen werden über ein hochelastisches Zwischenstück in Form einer Membran radial beweglich geführt, so daß eine Kopplung beider Dichtlippen gegeben ist und beide Dichtungen somit voneinander schwingungsabhängig sind.

Es hat sich gezeigt, daß bei Brennkraftmaschinen mit hohem Druck in den Ein- und/oder Auslaßkanälen, zum Beispiel bei Turbo-Motoren, der in den Ein- und Auslaßkanälen herrschende Druck derart hoch sein kann, daß die Dichtlippen vom Ventilschaft abheben. Bei einem Druckanstieg auf der Brennraumseite kann der Gasdruck bei der bekannten Dichtungskonstruktion unmittelbar auf das Zwischenstück beziehungsweise auf die Membran wirken, wodurch dieses nach außen gedrückt beziehungsweise bei Unterdruck nach innen gezogen wird. Die Gaslippe dient dann als Drehpunkt einer Radialbewegung der Öllippe, so daß die Anpressung der Öllippe beeinflußt wird und somit große Schwankungen der Öldosiermengen verursacht werden.

Der Erfindung liegt die Aufgabe zugrunde, eine gattungsgemäße Ventilschaftabdichtung dahingehend zu verbessern, daß auch bei großen Druckschwankungen die Öllippe nicht vom Ventilschaft abhebt.

Diese Aufgabe wird erfindungsgemäß dadurch gelöst, daß die Gaslippe axial außerhalb des Membranbereiches direkt mit dem Hafteil verbunden ist, und daß zwischen Gaslippe und Membran ein druckstabiler Bereich vorgesehen ist, so daß Öl- und Gaslippe schwingungstechnisch voneinander entkoppelt sind. Durch die besondere Anordnung und Entkopplung der Gaslippe von der Öllippe wird bei Druckanstieg die Gaslippe stärker an den Ventilschaft gepreßt. Die Auswirkung des Druckes auf die Öllippe wird verhindert, da über den druckstabilen Bereich die elastische Membran abgeschirmt ist.

Vorzugsweise ist der druckstabile Bereich durch einen radial nach innen sich erstreckenden Schenkel des Gehäuses gebildet. Hierdurch wirkt das Gehäuse beziehungsweise der Schenkel als Versteifungskörper, so daß die Öllippe vom Gasdruck abgeschirmt ist. Um das Öl aus dem Raum zwischen Öl- und Gaslippe abführen zu können, ist der Dichtkantenwinkel der Gaslippe auf der Brennraumseite größer als auf der Medienseite.

Darüber hinaus bewirkt eine derartige Winkelkonstruktion, daß der Druck die Dichtlippe stark an den Ventilschaft preßt und die Dichtlippe nicht in den Raum zwischen Öl- und Gaslippe umschlagen kann. Um eine permanente Gasabdichtung zu erzeugen, ist der Innendurchmesser der Gaslippe kleiner als der Ventilschaftdurchmesser, so daß die Gaslippe mit Überdeckung auf dem Ventilschaft aufliegt.

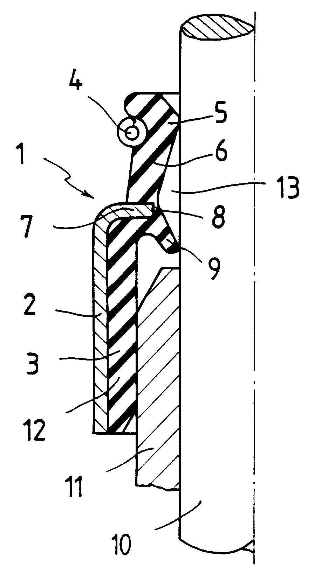

Ein Ausführungsbeispiel der Erfindung ist in der Zeichnung dargestellt und wird im folgenden näher erläutert:
Die in der Figur dargestellte Ventilschaftabdichtung (1) weist ein verformungssteifes Gehäuse (2), einen elastomeren Dichtkörper (3) und eine ringförmige Schraubenfeder (4) auf. Der Dichtkörper (3) ist mit dem Gehäuse (2) durch Vulkanisation verbunden und weist eine zur Medienseite, das heißt zur Ventildeckelseite des Motors, gerichtete Dichtlippe auf, die als Öllippe (5) fungiert. Axial neben der Öllippe (5) schließt sich eine radiale Bewegungen der Öllippe zulassende Membran (6) an. Ein radial nach innen abgewinkelter Schenkel (7) des Gehäuses (2) erstreckt sich in den Dichtkörper (3) und definiert auf diese Weise einen druckstabilen Bereich (8) außerhalb der Membran (6). Daran axial anschließend erstreckt sich eine zum Brennraum gerichtete Gaslippe (9). Gas- und Öllippe (9,5) liegen am Ventilschaft (10) an. Die Gaslippe (9) ist direkt mit einem auf die Ventilführung (11) aufsteckbaren Hafteil (12) verbunden. Auf diese Weise schirmt die Gaslippe (9) die Membran (6) und damit die Öllippe (5) von Druckschwankungen ab. Der Druck wird vom Gehäuse (2) und dessen Radialschenkel (7) kompensiert, ohne daß die Öllippe (5) vom Ventilschaft abheben kann oder daß eine Dichtkanten-Geometrieänderung eintritt. Eine Druckerhöhung bewirkt die Anpressung der Gaslippe (9) an den Ventilschaft (10). Durch die schwingungstechnische Abkopplung der Öllippe (5) über den druckstabilen Bereich (8) wirkt sich die Radialbewegung der Gaslippe (9) nicht auf die Öllippe (5) aus. Die Gaslippe (9) ist so gestaltet, daß das von der Öllippe (5) durchgelassene Öl zur Ventilführung (11) vom Raum (13) zwischen Öl- und Gaslippe (5,9) weitergeleitet wird.

**Patentansprüche**

1. Ventilschaftabdichtung für Brennkraftmaschinen mit hohem Druck in den Ein- und/oder Auslaßkanälen, bestehend aus einem verformungssteifen Gehäuse, in dem ein elastomerer Dichtkörper angeordnet ist, welcher mindestens zwei am Ventilschaft anliegende, in entgegengesetzte Richtungen wirkende Dichtlippen aufweist, wobei eine zur Medienseite gerichtete Dichtlippe als Öllippe und eine zur Brennraumseite gerichtete Dichtlippe als Gaslippe fungiert, sowie einem auf die Ventilführung aufsteckbaren Haftteil und einer radiale Bewegungen zulassenden elastischen Membran, welche mit der Öllippe verbunden ist, dadurch gekennzeichnet, daß die Gaslippe (9) axial außerhalb des Membranbereiches (6) direkt mit dem Haftteil verbunden ist, und daß zwischen Gaslippe (9) und Membran (6) ein druckstabiler Bereich (8) vorgesehen ist, so daß Öl- und Gaslippe (5,9) schwingungstechnisch voneinander entkoppelt sind.

2. Ventilschaftabdichtung nach Anspruch 1, dadurch gekennzeichnet, daß der Bereich (8) durch einen radial nach innen sich erstreckenden Schenkel (7) des Gehäuses (2) gebildet ist.

3. Ventilschaftabdichtung nach den Ansprüchen 1 und 2, dadurch gekennzeichnet, daß der Dichtkantenwinkel der Gaslippe (9) auf der Brennraumseite größer als auf der Medienseite ist.

4. Ventilschaftabdichtung nach den Ansprüchen 1 bis 3, dadurch gekennzeichnet, daß der Innendurchmesser der Gaslippe (9) kleiner als der Ventilschaftdurchmesser (10) ist.

Europäisches
Patentamt

**EUROPÄISCHER RECHERCHENBERICHT**

Nummer der Anmeldung

EP    92 10 2994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3 538 240 (GOETZE AG)<br>* Spalte 2, Zeile 42 - Zeile 62; Abbildung 2 * | 1-3 | F01L3/08<br>F16J15/32 |
| | --- | | |
| Y | AUTOMOTIVE ENGINEERING<br>Bd. 90, Nr. 1, 1. Januar 1982, DALLAS, TEXAS, USA<br>Seiten 75 - 78<br>DEURING 'valve stem seals handle oil metering and wear' | 1-3 | |
| | --- | | |
| A | FR-A-1 398 656 (SYMINGTON WAYNE CORPORATION)<br>* Das ganze dokument * | 1,4 | |
| | ----- | | |

| | | | RECHERCHIERTE SACHGEBIETE (Int. Cl.5) |
|---|---|---|---|
| | | | F01L<br>F16J |

Der vorliegende Recherchenbericht wurde für alle Patentansprüche erstellt

| Recherchenort | Abschlußdatum der Recherche | Prüfer |
|---|---|---|
| DEN HAAG | 23 SEPTEMBER 1992 | KLINGER T.G. |